(19) Europäisches Patentamt

European Patent Office

Office européen des brevets

(11) Publication number: **0 312 209 B1**

(12) **EUROPEAN PATENT SPECIFICATION**

(45) Date of publication of patent specification: **25.11.92**

(51) Int. Cl.⁵: **G10L 5/06**

(21) Application number: **88308585.4**

(22) Date of filing: **16.09.88**

(54) **Speech recognition system using Markov models.**

(30) Priority: **12.10.87 JP 254821/87**

(43) Date of publication of application:
**19.04.89 Bulletin 89/16**

(45) Publication of the grant of the patent:
**25.11.92 Bulletin 92/48**

(84) Designated Contracting States:
**DE FR GB**

(56) References cited:
**EP-A- 0 303 022**

**ICASSP 88 - IEEE INTERNATIONAL CONFER-
ENCE ON ACOUSTICS, SPEECH AND SIGNAL
PROCESSING, New York, 11th-14th April
1988, vol. 1, pages 207-210, IEEE, New York,
US; M. NISHIMURA et al.: "Speaker adapta-
tion method for HMM-based speech recogni-
tion"**

(73) Proprietor: **International Business Machines
Corporation
Old Orchard Road
Armonk, N.Y. 10504(US)**

(72) Inventor: **Nishimura, Masafumi Denendomiiru
405
29-2 Shinishikawa 3-chome Midoriku
Yokohama-shi Kanagawa-ken(JP)**

(74) Representative: **Atchley, Martin John Waldeg-
rave
IBM United Kingdom Limited Intellectual
Property Department Hursley Park
Winchester Hampshire SO21 2JN(GB)**

Rank Xerox (UK) Business Services

## Description

The present invention relates to a speech recognition system using Markov models and more particularly to a speech recognition method wherein speaker adaptation and circumstantial noise adaptation can be easily performed.

In speech recognition systems using Markov models, speech is recognised from probabilistic view points. In one system, for example, a Markov model is established for each word. Usually a plurality of states and transitions between the states are defined for each Markov model, and occurrence probabilities are assigned for each state transition. Further output probabilities of labels or symbols are assigned for each state or state transition. Input unknown speech is converted into a label string, and thereafter the probability of each word Markov model outputting the label string is determined based on the transition occurrence probabilities and the label output probabilities, which are hereafter referred to as parameters. Then the word Markov model having the highest probability of producing the label string is determined. The recognition is performed according to this result. In speech recognition systems using Markov models, the parameters can be estimated statistically so that a recognition score is improved.

The details of the above recognition technique are described in the following articles.

(1) "A Maximum Likelihood Approach to Continuous Speech Recognition" (IEEE Transactions on Pattern Analysis and Machine Intelligence, PAMI-Vol.5, No.2, pp. 179-190, 1983, Lalit R.Bahl, Frederick Jelinek and Robert L. Mercer).

(2) "Continuous Speech Recognition by Statistical Methods" (Proceedings of the IEEE vol. 64, 1976, pp.532-556, Frederick Jelinek).

(3) "An Introduction to the Application of the Theory of Probabilistic Functions of a Markov Process to Automatic Speech Recognition" (The Bell System Technical Journal vol.64, No.4, 1983, April, S.E.Levinson, L.R.Rabiner and M.M. Sondhi).

However, a speech recognition system using Markov models needs a tremendous amount of speech data and the training thereof requires much time. Furthermore a system trained with a certain speaker often does not get sufficient recognition scores for other speakers. Even with the same speaker, when there is a long time between the training and the recognition, that is there is a difference between the two circumstances, only poor recognition can be achieved. In addition, degradation of recognition accuracy due to circumstantial noise is another issue.

Recently adaptation of trained Markov models for a speaker or a circumstance is often proposed. These proposals are considered to be classified into the following two types.

In proposals of the first type, event frequencies used for estimating parameters of Markov models during initial training are reserved, and further event frequencies are obtained for adaptation data. Thereafter these event frequencies are interpolated to estimate new parameters. Such proposals are described in :

(4)"Speaker Adaptation for A Hidden Markov Model", Proceedings of ICASSP '86, 1986, April,49-11,pp 2667-2670, Kazuhide Sugawara, Masafumi Nishimura, Akihiro Kuroda.

(5) Japanese Patent Application No.61-65030 [European Patent Application 87302603.3 (EP-A- 243009)].

These proposals however require all the words for adaptation to be spoken, and consequently impose a burden on users in large vocabulary speech recognition. Further they require much more computation time.

In proposals of the second type, Markov models produced by initial training are modified according to the relation between parameters. These proposals are described in :

(6) "Isolated Word Recognition Using Hidden Markov Models", Proceeding of ICASSP'85, 1985, March, 1-1, pp1-4, Kazuhide Sugawara, Masafumi Nishimura, Kouichi Toshioka, Masaaki Okochi, Toyohisa Kaneko.

(7) "Rapid Speaker Adaptation Using A Probabilistic Spectral Mapping", Proceedings of ICASSP'87, 1987, March, 15-3, pp 633-638, Richard Schwartz, Yen-Lu Chow, Francis Kubala.

In the technique described in the article (6), DP-matching is performed among labelled words, and a confusion matrix of labels is produced according to the relation between labels in respect of an optimum path. Then parameters of Markov models are modified using that confusion matrix. In this approach, DP-matching is required in addition to the use of Markov models, so that storage efficiency is not good. Further, a large amount of speech data is required for the production of a confusion matrix having enough accuracy. The technique described in the article (7) directly converts relation probabilities between labels into output probabilities of conventional Markov models. This approach requires forward/backward calculation and, as a result, very large computational costs and storage costs.

The following article is another relevant reference which describes adaptation of features for vector quantisation.

(8) "Speaker Adaptation by Vector Quantization", Transactions of the Institute of Electronics and Communication Engineers of Japan, 1986, December, SP86-65, pp33-40, Kiyohiro Shikano.

Prior not pre-published EP-A-0303022 discloses a speech recognition system including Markov models which can be adapted to a new speaker. Speaker-dependent labels are used to label adaptation speech and a confusion probability matrix is computed. This matrix serves as a basis to compute new Markov model parameters for the new speaker.

The object of the present invention is to provide an improved speech recognition system in which a trained system can be adapted for different circumstances and the adaptation can be done more easily.

The present invention relates to a speech recognition system including Markov models in which speech is labelled by means of labels out of a label set, the Markov models being trained by an initial label set derived from initial training speech and being adapted using adaptation speech.

According to the invention the recognition system comprises means for adapting the initial label set into an adaptation label set using adaptation speech, by modifying a prototype of each label in the initial label set so as to generate a prototype of each label in the adaptation label set, the modification consisting of classifying feature vectors extracted from the adaptation speech into classes according to label prototypes of the initial label set and using an average of each of the classes as a corresponding prototype of the adaptation label set, means for labelling adaptation speech into an adaptation label string, means for connecting each label in each of the adaptation label strings with each state or each state transition of a Markov model which corresponds to the adaptation label string concerned, the connection being established by a path along which each of the adaptation label strings is aligned either linearly or according to the Viterbi algorithm with the Markov model, means for determining table entries featuring the probability of a label spoken by the subsequent speaker corresponding to a label spoken by the reference speaker, based on the connection between each label in the adaptation label string and each of the states or state transitions and the probability values of the Markov models concerned with the initial label set, and means for determining the probability values of each of the Markov models corresponding to the adaptation label string, based on the table entries and the probability values of the Markov models concerned with the initial label set.

According to one embodiment of the invention, adaptation speech is first labelled. Next, each label string is connected with the corresponding Markov model in respect of the time sequence. Each of the Markov models has been in advance estimated with a lot of speech data. Based on the connection therebetween, the frequency of connection between each label and each state transition is counted, and, from the resultant counts, conditional probabilities between labels and state transitions are estimated. Using these conditional probabilities, parameters of Markov models which were obtained in advance are interpreted into new parameters. In this connection, before labelling adaptation speech, label prototypes may be modified using the adaptation speech to minimise quantisation error.

In order that the invention may be more readily understood an embodiment will now be described with reference to the accompanying drawings, in which :

Fig. 1 is a diagram illustrating a principle of a speech recognition system,

Fig. 2 is a block diagram illustrating one embodiment of the invention,

Fig. 3 is a flow chart describing the operation of the labelling block 8 of the embodiment shown in Fig. 2,

Fig. 4 is a flow chart describing the label prototype adaptation block 7 of the embodiment shown in Fig. 2,

Fig. 5 is a flow chart describing the operation of the Markov model initial training block 11 of the embodiment shown in Fig. 2,

Fig. 6 and Fig. 7 are diagrams for describing the flow of the operation shown in Fig. 5,

Fig. 8 is a diagram for describing the operation of the Markov model adaptation block 12 of the embodiment shown in Fig. 2,

Fig. 9 is a flow chart describing the operation shown in Fig. 8, and

Fig. 10 is a diagram for showing the experimental result of the present invention.

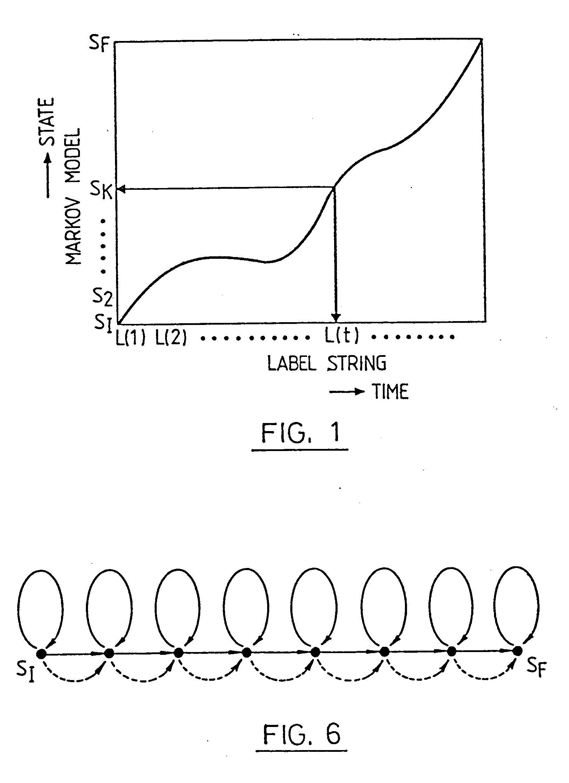

The connection between a Markov model and a label string of adaptation speech is illustrated in Fig.1. In Fig.1, the abscissa axis represents a label string corresponding to speech used for adaptation of a speech recognition system, and the ordinate axis indicates the states of a Markov model. An input label is shown by L(t). "t" indicates time. As shown in Fig.1, when V represents the relationship between the label string and the states of the model, the state Sk of the Markov model is obtained by

$$Sk = V(L(t))$$

The frequency of connection C of each label L(t) is obtained by counting output probabilities of that label at the state $Sk,P(Li \mid Sk)$. Here Li is a label identifier for initial training and Lj (see below) is one for

adaptation.

$$C(Lj,Li) = \sum_{L(t)=Lj} P(Li\ V(L(t)))$$

The probability of the label Lj being connected with the label Li is obtained by normalising the frequency C for each Li as expressed below.

$$P(Lj\ Li) = C(Lj,Li) / \sum_{Lj} C(Lj,Li)$$

The output probability P(Li Sk) of a Markov model previously established is interpreted by the following expression with the above probability P(Lj,Li) to produce parameters on which the adaptation data accurately reflects.

$$P(Lj\ Sk) = \sum_{Lj} P(Li\ Sk)P(Lj\ Li)$$

For transition probabilities, likewise, the frequencies of connection between state transitions are counted by using the transition probability at each state, P(Ti Sk), along the state transition path specified by the relationship between the label string of adaptation speech and the states of the Markov model. The probability P(Tj Ti) is obtained by normalising the frequency. Transition probabilities previously established are transformed by the following expression with the above probabilities P(Tj Ti), and then used for speech recognition.

$$P(Tj\ Sk) = \sum_{Ti} P(Ti\ Sk)P(Tj\ Ti)$$

In the above discussion, an explanation is made for the case in which a Markov model has label output probabilities and state transition probabilities as probabilistic parameters separately. The present invention can be applied to the case in which each state has label output probabilities.

Further adaptation in respect with only label prototypes or only parameters of Markov models is possible.

In the above example, as suggested by Fig.1, labels L(t) are connected with states Sk by using the path along which the label string is most favourably aligned with the Markov model. For this purpose a Viterbi algorithm for speech recognition can be used without any modification. The connection is not however limited to the above, and can be modified. For example, a label string can be related with states linearly.

Now, referring to the drawings, the present invention will be explained below with respect to an embodiment thereof which is applied to a word recognition system.

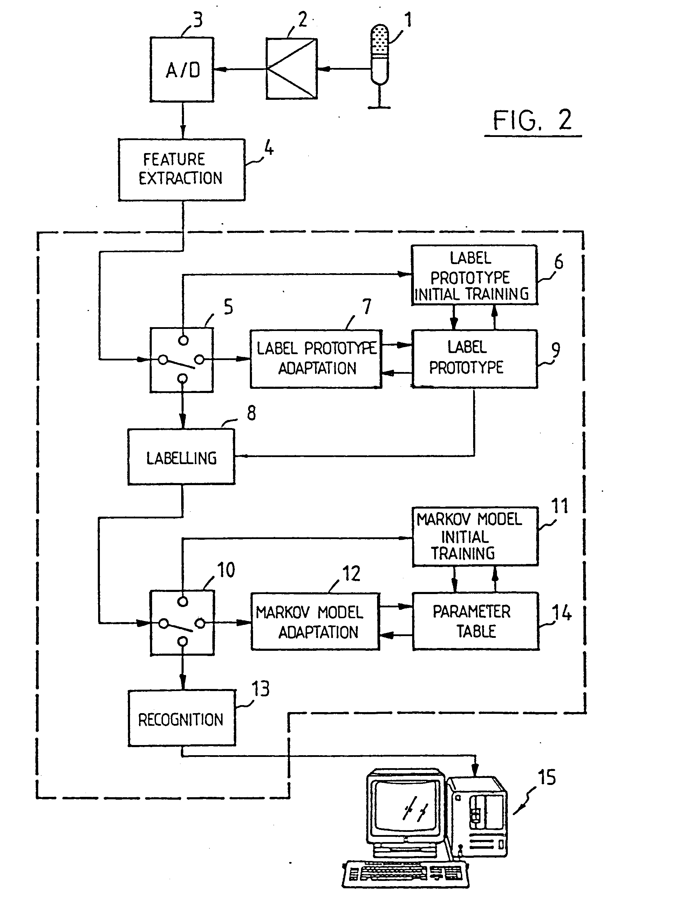

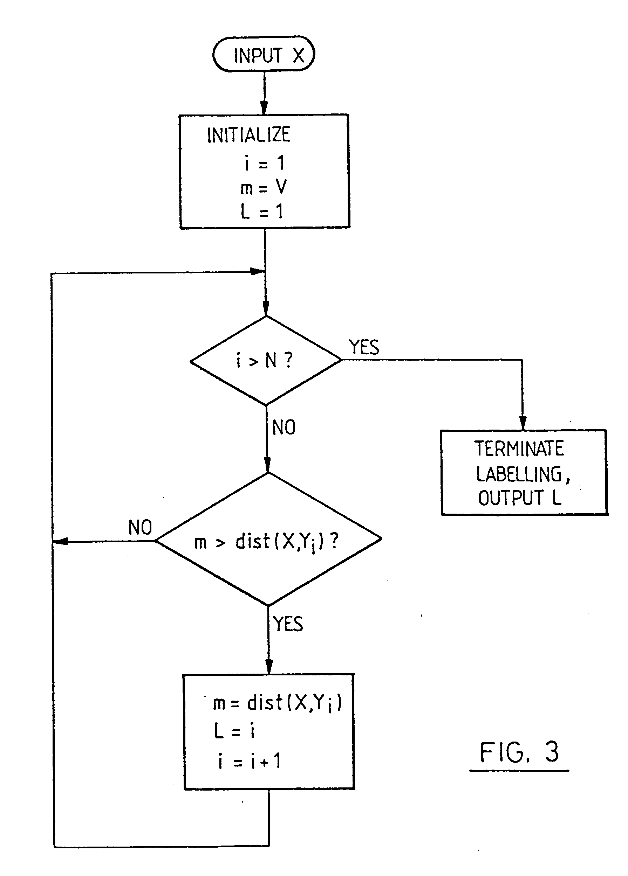

In Fig.2 illustrating the embodiment as a whole, input speech data is supplied to an analog/digital (A/D) converter 3 through a microphone 1 and an amplifier 2 to be converted into digital data, which is then supplied to a feature extracting block 4. In the feature extracting block 4, speech data is at first discrete-Fourier-transformed and is then outputted at each channel of a 20 channel critical band pass filter on which acoustical sense features reflect. The output is provided to the next stage, a switching block 5 via a window of 25.6 milli seconds every 8 milli seconds, and subsequently supplied to either a label prototype initial training block 6, a label prototype adaptation block 7 or a labelling block 8. During initial training of label prototypes, the switching block 5 is switched to the label prototype training block 6 and supplies the output of the critical band pass filter to that training block 6. The training block 6 produces a dictionary consisting of 128 label prototypes by clustering. During adaptation of label prototypes, the switching block 5 is switched to the adaptation block 7 which thus adapts the prototype dictionary 9 produced by the initial training label prototypes. The details of the adaptation block are described later referring to Fig.3. During speech recognition, initial training of Markov models or adaptation of them, the switching block 5 is switched to the labelling block 8 which then performs labelling by consulting the label prototype dictionary 9. Label prototypes produced by initial training are used without any change for initial training of Markov models.

The labelling is for example performed as shown in Fig.3, in which X is the input feature, Yi is the feature of the i-th prototype, N is the total number of the prototypes(=128), dist(X, Yi) is the Euclid distance between X and Yi, and m is the minimum value among previous dist(X,Yi)'s. m is initialised to a very large number. As shown in the Figure input features X's are in turn compared with each feature prototype, and for each input feature the most like prototype, that is, the prototype having the shortest distance is selected as an observed label or label number L.

As described above, the labelling block 8 produces an output label string with a time period of eight milli secs. between consecutive labels.

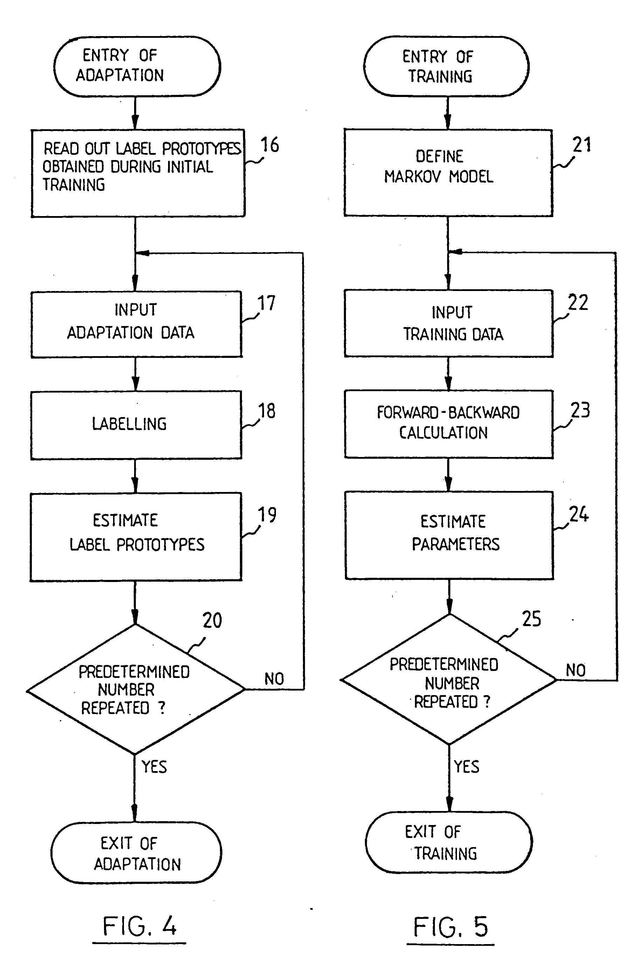

As shown in Fig.2 label strings from the labelling block 8 are provided to either a Markov model initial training block 11, or a Markov model adaptation block 12, or a recognition block 13, through a switching block 10. The detailed description about the operation of the initial training block 11 and the adaptation block 12 will be given later referring to Fig.5 and the following Figures. During Markov model initial training, the switching block 10 is switched to the training block 11 to provide the label string thereto. The training block 11 determines parameter values of a parameter table 14 by training Markov models using the label strings. During adaptation, the switching block 10 is switched to the adaptation block 12, which adapts the parameter values of the parameter table 14 based on the relation between input label strings and the states of the Markov models. During recognition, the switching block 10 is switched to the recognition block 13, which recognises input speech based on the label strings and the parameter table. The recognition block 13 can be designed according to Forward calculation or Vitervi algorithms.

The output of the recognition block 13 is provided to a workstation 15 and is for example displayed on its monitor screen.

The details of label prototype adaptation block 7 will be next described. Fig.4 illustrates the procedure of that adaptation, in which a label prototype dictionary obtained during the initial training is first read out, step 16. Adaptation speech is then inputted, step 17. The adaptation speech has been obtained from a speaker who intends to input speech to the system and can be of any type such as moras, sentences, words or the like. For example when a part of a recognition target vocabulary is spoken for use for this purpose, the speech can also be used for the Markov model adaptation block 12. The adaptation speech is labelled by using the label prototypes, step 18. After all the pieces of the adaptation speech are labelled, for each label number, feature vectors of the adaptation speech having that label number are averaged and the label prototype of that number is replaced with an average feature vector, step 19. The procedures mentioned above in the steps 17 to 19 are repeated a predetermined number of times, for example twice, and then the adaptation of the prototypes is completed.

In Fig.2 the blocks surrounded by the broken line can in practice be implemented in software on a host computer. An IBM 3083 processor can be used as the host computer, and CMS and PL/I can be used as an operation system and a language respectively. The above blocks can alternatively be implemented in hardware.

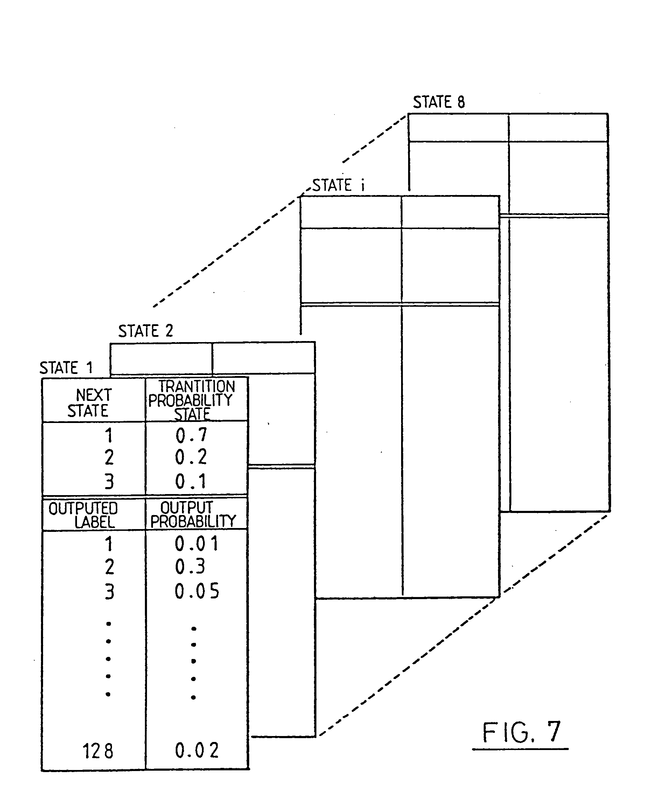

The operation of the Markov model initial training block 11 will be next described referring to Fig.5 and the following Figures. In the procedure of the initial training illustrated in Fig. 5, each word Markov model is first defined, step 21. Fig.6 shows an example of a word Markov model, in which small solid circles indicate states, and arrows show transitions. The number of the states including the initial state SI and the final state SF is 8. There are three types of transitions, that is, transitions to themselves T1, transitions to the next states T2 and null transitions to the next states without outputting any label T3.

To define the Markov models means to establish the parameter table 11 of Fig.2 tentatively. In particular, for each word a table format as shown in Fig.7 is assigned and the parameters P(Li Sk) and P(Ti Sk) are initialised. The parameter P(Li Sk) represents the probability of outputting a label Li in a state Sk, and P(Ti Sk) represents the probability of taking a transition Ti in a state Sk. Furthermore, in this initialisation the parameters are set so that transitions T1, T2 and T3 occur at probabilities of 0.9, 0.05 and 0.05 respectively, and so that on each transition all labels are produced at equal probability that is 1/128. In Fig.7 trained probabilities are shown.

After defining word Markov models, initial training data is inputted, step 22, which consists of label strings obtained by speaking words to be recognised ten times. As label prototypes, ones for initial training are used. After inputting initial training data, Forward-Backward calculation is performed, step 23. This calculation is performed for all initial training data for each word to be recognised and the parameters of the Markov model of each word are estimated, step 24. The procedures mentioned above in the steps 22 to 24 are reiterated a predetermined number of times, for example five times, with newly established parameters for each reiteration, and at that stage the initial training is completed.

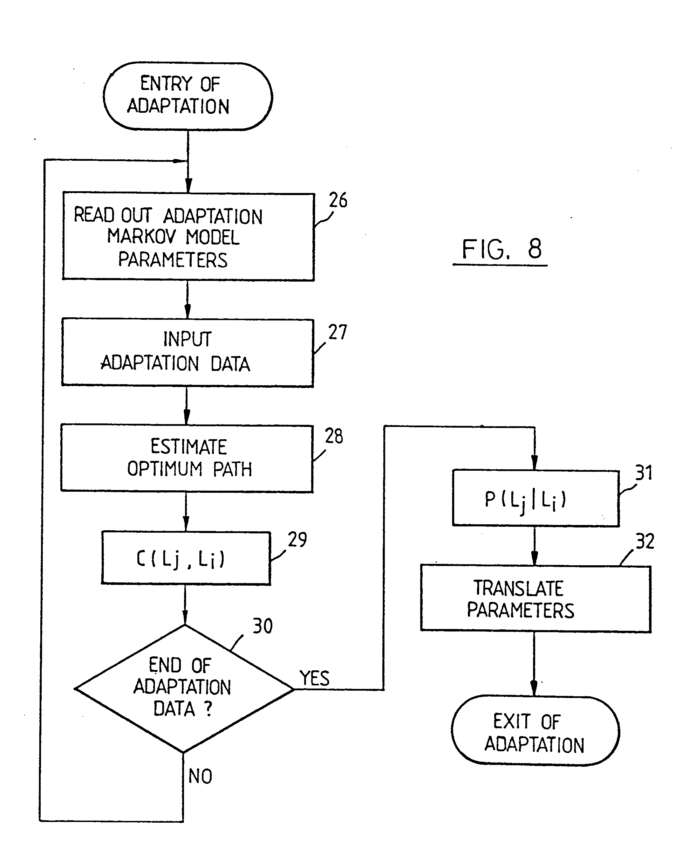

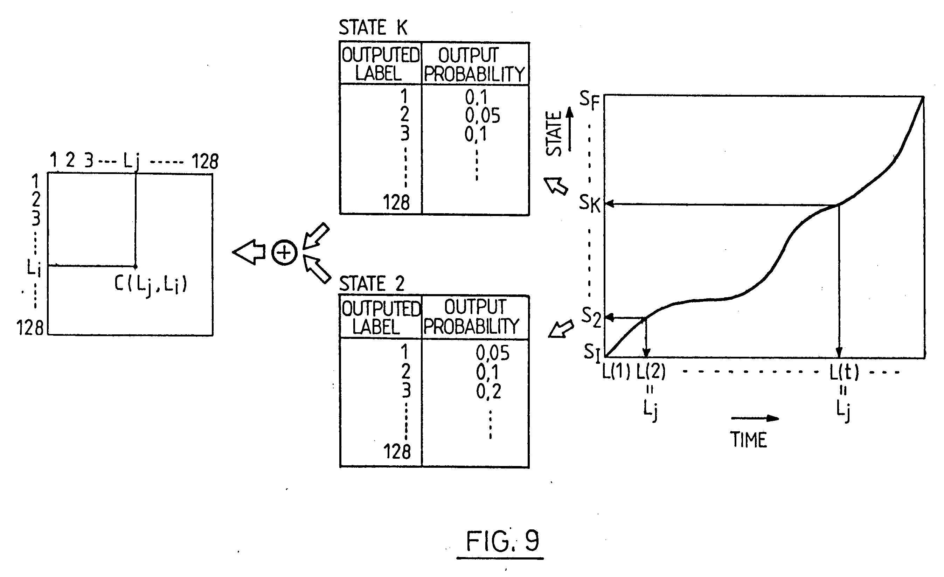

Next, the operation of the Markov model adaptation block 12 is described referring to Fig. 8 and Fig. 9. An example is considered wherein some of the target words are used for adaptation of the output probabilities of Markov models. In Fig. 8, at first, the parameters of the Markov model for one of the words used for the adaptation are read in, step 26. They are ones obtained in the initial training above. Next the speech of the adaptation word is inputted, step 27. This speech for the adaptation is spoken by the speaker who wants to speak and input, and is labelled using the label prototypes adapted by the adaptation block 7. Then the label string of the adaptation speech and the states of the word Markov model are connected with each other along the most favourable path by a Vitervi algorithm, step 28. If V is the relation between the labels and the states of the Markov model along the most favourable path determined by Vitervi algorithm, this can be expressed by the following equation.

$$Sk \ = \ V(L(w,t))$$

where Sk is a state number
L(w,t) is a label number for a word number w
and time number t.

Along the path, the probabilities of a label Li being connected with Lj are counted and summed, step 29.

$$C(Li,Lj) \ = \ \sum_{L(w,t)=Lj} P(Li \ V(L(w,t)))$$

Fig. 9 shows the above operation pictorially.

The procedures mentioned above in steps 26 to 29 are performed for each piece of speech used for the adaptation process. C(Lj, Li) obtained is normalised for each Li and then P(Lj Li) is determined, step 31.

$$P(Lj \ Li) = C(Lj,Li) / \sum_{Lj} C(Lj,Li)$$

Finally all the output probabilities of the Markov models, which have been obtained in the initial training, are transformed using P(Lj Li), step 32.

$$P(Lj \ Sk) \ = \ \sum_{Li} P(Li \ Sk) P(Lj \ Li)$$

The method of establishing the output probabilities is explained above. The transition probabilities are established in a similar manner.

After performing the steps mentioned above, the adaptation is completed. After that, the speech of the speaker for whom the adaptation was performed can be recognised at a high accuracy.

The system described can be adapted very rapidly for different circumstances using only a small amount of adaptation data, such as some of the recognition target words. In particular, by using the system described in situations in which the input speech has a large vocabulary of more than one thousand recognition target words, where in the earlier system it had been necessary for the speaker to speak each item of speech several times in each different circumstance and for each word which imposed a heavy load on that speaker and a tremendous amount of computational cost was required, the load on the speaker is appreciably reduced and the efficiency increased. Using the system described the initial training data obtained for one speaker can be used for others. Furthermore since only P(Lj Li) and P(Tj Ti) are required as tables for adaptation for speakers or circumstances, very little of memory capacity and computational capacity are required for the new system.

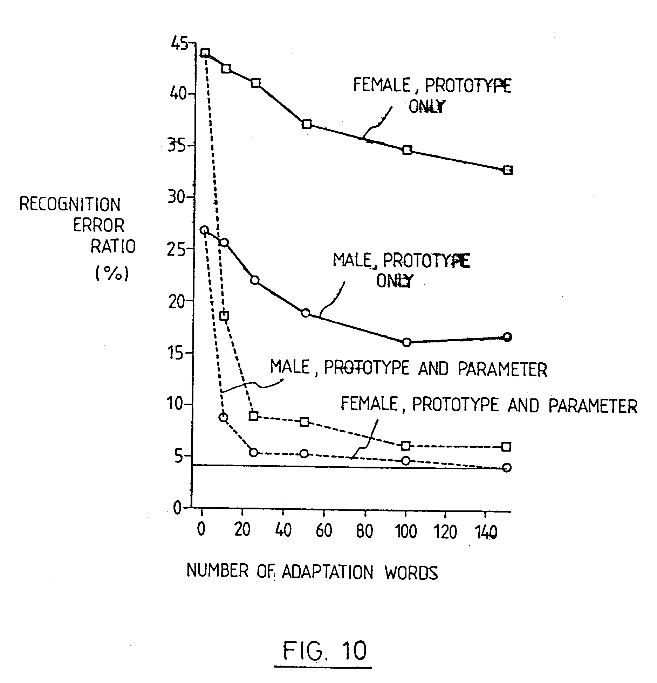

An experiment was made for evaluation of an embodiment, in which one hundred and fifty words which are similar to each other such as "keiho"( in Japanese, alarm), "heiho"( square); "tyokusen"( straight line), "tyokuzen"( immediately before) were used as recognition target words. In this experiment, one male speaker was required to speak each of the 150 words ten times for use as initial training data for label prototypes and Markov models, and the adaptation for seven speakers, five males and two females, was evaluated. The adaptation was performed using a partial vocabulary (10, 25, 50, 100, and 150 words, each word being spoken only once), and each speaker spoke each of the 150 words three times for recognition. Fig.10 shows the result of the experiment. In this figure the abscissa axis indicates the number of adaptation words and the ordinate axis indicates an average error rate. The circles indicate male speaker data and the squares indicate female speaker data. The solid lines indicate adaptation of only prototypes and the dashed lines indicate adaptation of parameters of Markov models as well. Further the solid line of 4% is the experimental result of recognition for the speaker who trained initially. From that result, it is understood that recognition rates for male speakers can be improved as equivalent to the speaker who initially trained the system by adaptation with 25 words speech. Furthermore the adaptation for female speakers, which was in the past considered difficult, can be achieved sufficiently.

The scope of the present invention is not limited to the above embodiment, and different changes can be made without departing from that scope. For example this invention can be applied to the adaptation in feneme type HMM speech recognition described in Japanese Patent Application No.61-16993 (EP-A-238693). In this adaptation, the label strings of adaptation speech and the strings of feneme Markov models (each string forming a word Markov model) are aligned to map the labels of the adaptation speech onto the states of the word Markov models.

## Claims

1.  A speech recognition system including Markov models in which speech is labelled by means of labels out of a label set, the Markov models being trained by an initial label set derived from initial training speech and being adapted using adaptation speech, characterised in that said system comprises

    means (5,7) for adapting the initial label set into an adaptation label set using adaptation speech, by modifying a prototype of each label in said initial label set so as to generate a prototype of each label in said adaptation label set, the modification consisting of classifying feature vectors extracted from said adaptation speech into classes according to label prototypes of said initial label set and using an average of each of said classes as a corresponding prototype of said adaptation label set,

    means (5,8) for labelling adaptation speech into an adaptation label string,

    means for connecting each label in each of said adaptation label strings with each state or each state transition of a Markov model which corresponds to the adaptation label string concerned, the connection being established by a path along which each of said adaptation label strings is aligned either linearly or according to the Viterbi algorithm with the said Markov model,

    means for determining table entries featuring the probability of a label Lj spoken by the subsequent speaker corresponding to a label Li spoken by the reference speaker, based on the connection between each label in said adaptation label string and each of said states or state transitions and the probability values of the Markov models concerned with said initial label set, and

    means for determining the probability values of each of said Markov models corresponding to said adaptation label string, based on said table entries and said probability values of the Markov models concerned with said initial label set.

## Patentansprüche

1.  Spracherkennungssystem mit Markov-Modellen bei welchem Sprache mittels Marken aus einem Markensatz markiert ist, wobei die Markov-Modelle von einem Anfangsmarkensatz geübt werden, der aus Anfangsübungssprechen abgeleitet ist und unter Verwendung von Adaptierungssprechen adaptiert ist, dadurch gekennzeichnet, daß das System folgendes aufweist:

    Mittel (5, 7) zum Adaptieren des Anfangsmarkensatzes zu einem Adaptierungsmarkensatz unter Verwendung von Adaptierungssprechen durch Ändern eines Prototyps jeder Marke in dem Anfangsmarkensatz, um einen Prototyp jeder Marke in dem Adaptierungsmarkensatz zu erzeugen, wobei die Änderung aus folgendem besteht: Klassifizieren von Kennzeichenvektoren, die aus dem Adaptierungssprechen extrahiert sind, in Klassen entsprechend Markenprototypen des Anfangsmarkensatzes und Verwenden eines Durchschnitts jeder der Klassen wie einen entsprechenden Prototyp des Adaptierungsmarkensatzes,

Mittel (5, 8) zum Markieren von Adaptierungssprechen zu einer Adaptierungsmarkenkette,

Mittel zum Verbinden jeder Marke in jeder der Adaptierungsmarkenketten mit jedem Zustand oder jedem Zustandsübergang eines Markov-Modells, welches der betroffenen Adaptierungsmarkenkette entspricht, wobei die Verbindung durch einen Pfad festgelegt ist, entlang dessen jede der Adpatierungsmarkenketten entweder linear oder entsprechend dem Viterbi-Algorithmus mit dem Markov-Modell ausgerichtet ist,

Mittel zum Bestimmen von Tabelleneintragungen, welche folgendes kennzeichnen: die Wahrscheinlichkeit einer von dem nachfolgenden Sprecher gesprochenen Marke Lj, die einer Marke Li entspricht, die von dem Referenzsprecher gesprochen ist, auf der Grundlage der Verbindung zwischen jeder Marke in der Adaptierungsmarkenkette und jedem der Zustände oder Zustandsübergänge und der Wahrscheinlichkeitswerte der Markov-Modelle, welche den Anfangsmarkensatz betreffen und

Mittel zum Bestimmen der Wahrscheinlichkeitswerte jedes der Markov-Modelle, welche der Adaptierungsmarkenkette entsprechen, auf der Grundlage der Tabelleneintragungen und der Wahrscheinlichkeitswerte der Markov-Modelle, welche den Anfangsmarkensatz betreffen.

## Revendications

**1.** Système de reconnaissance de la parole comportant des modèles markoviens dans lesquels la parole est étiquetée au moyen d'étiquettes parmi un ensemble d'étiquettes, les modèles markoviens étant formés par un ensemble d'étiquettes initial obtenu à partir d'une parole d'apprentissage initiale et étant adapté en utilisant une parole d'adaptation, caractérisé en ce que ledit système comprend :

un moyen (5, 7) pour adapter l'ensemble d'étiquettes initial en un ensemble d'étiquettes d'adaptation en utilisant la parole d'adaptation, en modifiant un prototype de chaque étiquette dans ledit ensemble d'étiquettes initial de façon à produire un prototype de chaque étiquette dans ledit ensemble d'étiquettes d'adaptation, la modification consistant à classer des vecteurs caractéristiques extraits de la parole d'adaptation en classes conformément aux prototypes d'étiquettes dudit ensemble d'étiquettes initial et à utiliser une moyenne de chacune desdites classes comme un prototype correspondant dudit ensemble d'étiquettes d'adaptation,

un moyen (5, 8) pour étiqueter la parole d'adaptation en une chaîne d'étiquettes d'adaptation,

un moyen pour relier chaque étiquette dans chacune desdites chaînes d'étiquettes d'adaptation à chaque état ou à chaque transition d'état d'un modèle markovien qui correspond à la chaîne d'étiquettes d'adaptation concernée, la liaison étant établie par un trajet suivant lequel chaque étiquette d'adaptation est alignée soit linéairement soit conformément à l'algorithme de Viterbi avec ledit modèle markovien,

un moyen pour déterminer les entrées des tables caractérisant la probabilité d'une étiquette Lj prononcée par le locuteur ultérieur correspondant à une étiquette Li prononcée par le locuteur de référence, basé sur la liaison entre chaque étiquette dans ladite chaîne d'étiquettes d'adaptation et chacun desdits états ou transitions d'état et les valeurs de probabilité des modèles markoviens concernées avec ledit ensemble d'étiquettes initial, et

un moyen pour déterminer les valeurs de probabilité de chacun desdits modèles markoviens correspondant à ladite chaîne d'étiquettes d'adaptation, basé sur lesdites entrées de table et lesdites valeurs de probabilité des modèles markoviens concernées avec ledit ensemble d'étiquettes initial.

FIG. 1

FIG. 6

FIG. 2

INPUT X

INITIALIZE
$i = 1$
$m = V$
$L = 1$

$i > N$ ? — YES → TERMINATE LABELLING, OUTPUT L

NO

$m > dist(X, Y_i)$ ? — NO →

YES

$m = dist(X, Y_i)$
$L = i$
$i = i + 1$

FIG. 3

11

ENTRY OF
ADAPTATION

READ OUT LABEL PROTOTYPES
OBTAINED DURING INITIAL
TRAINING — 16

INPUT
ADAPTATION DATA — 17

LABELLING — 18

ESTIMATE
LABEL PROTOTYPES — 19

PREDETERMINED
NUMBER
REPEATED ? — 20

NO

YES

EXIT OF
ADAPTATION

FIG. 4

ENTRY OF
TRAINING

DEFINE
MARKOV MODEL — 21

INPUT
TRAINING DATA — 22

FORWARD - BACKWARD
CALCULATION — 23

ESTIMATE
PARAMETERS — 24

PREDETERMINED
NUMBER
REPEATED ? — 25

NO

YES

EXIT OF
TRAINING

FIG. 5

STATE 8

STATE i

STATE 2

STATE 1

| NEXT STATE | TRANTITION PROBABILITY STATE |
|---|---|
| 1 | 0.7 |
| 2 | 0.2 |
| 3 | 0.1 |

| OUTPUTED LABEL | OUTPUT PROBABILITY |
|---|---|
| 1 | 0.01 |
| 2 | 0.3 |
| 3 | 0.05 |
| . | . |
| . | . |
| . | . |
| . | . |
| . | . |
| 128 | 0.02 |

FIG. 7

FIG. 8

FIG. 9

FIG. 10